(19) Europäisches Patentamt
European Patent Office
Office européen des brevets

(11) EP 2 730 984 B1

(12) EUROPEAN PATENT SPECIFICATION

(45) Date of publication and mention
of the grant of the patent:
**04.07.2018 Bulletin 2018/27**

(51) Int Cl.:
**G05B 19/05** *(2006.01)*      **G05B 19/042** *(2006.01)*
**G08C 15/06** *(2006.01)*

(21) Application number: **13185329.3**

(22) Date of filing: **20.09.2013**

(54) **Sensor system**

Sensorsystem

Système de détection

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2012 JP 2012247317**

(43) Date of publication of application:
**14.05.2014 Bulletin 2014/20**

(73) Proprietor: **OMRON CORPORATION
Kyoto-shi, Kyoto 600-8530 (JP)**

(72) Inventors:
• **Iida, Yusuke
Kyoto, Kyoto 600-8530 (JP)**

• **Iguchi, Koji
Kyoto, Kyoto 600-8530 (JP)**
• **Kishiba, Hideyuki
Kyoto, Kyoto 600-8530 (JP)**
• **Gondo, Kiyohiko
Kyoto, Kyoto 600-8530 (JP)**

(74) Representative: **Horn Kleimann Waitzhofer
Patentanwälte PartG mbB
Ganghoferstrasse 29a
80339 München (DE)**

(56) References cited:
**EP-A1- 2 169 487      DE-A1- 19 815 149
US-A- 4 509 170      US-A1- 2001 027 359**

**Description**

BACKGROUND OF THE INVENTION

TECHNICAL FIELD

The present invention relates to a sensor system, particularly to a technology for controlling a transmission time of detection information on each sensor unit in a sensor system including a plurality of sensor units.

RELATED ART

The plurality of sensor units are provided in a production line. A PLC (Programmable Logic Controller) serving as a control device controls a production machine in response to signals input from various sensor units. In such a production system, there is a need to centralize input systems from the sensor units in order to simplify a system configuration.

In order to adapt the need, in a consecutively-connected type sensor system disclosed in Japanese Unexamined Patent Publication No. 2004-295276, discriminant signals of the sensor units are summarized to a master unit, the signals are transmitted to a high-order control device to monitor a detection target.

In Japanese Unexamined Patent Publication No. 2004-295276, the discriminant signal detected and binarized by a sensor head of the sensor unit is converted into a serial signal, and sequentially transmitted to the master unit through a serial transmission line. As described in Japanese Unexamined Patent Publication No. 2004-295276, a handshake system is usually adopted in serial communication conducted between the master unit and the sensor unit through the serial transmission line. In the handshake system, a transmission destination sends an acknowledge signal to a transmission source with respect to data transmitted from the transmission source, and data is transferred while the data reception is checked.

In Japanese Unexamined Patent Publication No. 2004-295276, because the sensor unit conducts the serial communication by the system in which the signal is sent back in response to a request from the master unit, the transmission from the sensor unit to the master unit may be delayed by a time necessary to transmit the request to the sensor unit from the master unit. Accordingly, the rate of the serial communication may be reduced.

DE 198 15 149 A1 describes an arrangement of optoelectronic distance sensors for detecting objects, wherein the distance sensors are connected to each other via a wiring system which allows one of the distance sensors to enable a transmission by individual transmitters, so that each transmitter transmits pulses during the rest period of the other transmitters.

US 4 509 170 A describes a time division multiplex transmission of submultiplex sequences of signals from sections of a chain of data acquisition units, wherein time Division Multiplex telemetry of submultiplex sequences of signals are transmitted synchronously by locking generators in each section.

SUMMARY

An object of the present invention is to enhance the communication rate in the sensor system including the plurality of sensor units.

In accordance with one aspect of the present invention, a sensor system includes: a plurality of sensor units; and a communication device configured to transmit information received from each of the sensor units to a control device, the communication device being connected to the control device and the sensor units so as to be able to transmit a signal. In the sensor system, each of the sensor units transmits detection information obtained by a detection operation of the sensor unit to the communication device after a waiting time fixed for each sensor unit elapses with a synchronization signal as a starting point (in other words, after a time corresponding to the waiting time of the sensor unit has passed after the synchronization signal), the synchronization signal being transmitted from one of the sensor units at a predetermined period, and the waiting time of each sensor unit is fixed so as to be different from waiting times of other sensor units. In other words, all sensors may be arranged to have mutually different waiting times. Note that in the context of this specification, "fixed" may mean "set".

The sensor units sequentially transmit the detection information without waiting a command from the control device, so that the communication rate can be enhanced compared with the case that the detection information is transmitted after the command is received.

In the sensor system, each sensor unit may transmit the detection information to the communication device after the waiting time respective elapses since (after) the synchronization signal is transmitted for a number of times fixed for the respective sensor unit. In the sensor system, each sensor unit may reset a count value of the number of times the synchronization signal has been transmitted, when the number of times the synchronization signal has been submitted reaches a predetermined number of times. Therefore, the number of transmission times of the synchronization signal at the time when the detection information is transmitted can be fixed within a finite range. In the sensor system, a count value at which the count value is reset may be fixed in accordance with the number of sensor units. For example, when the reset value of the count value is decreased with decreasing number of sensor units, the useless time in which the detection information is not transmitted can be shortened.

In the sensor system, the waiting time of each sensor unit may be fixed such that a transmission period of the detection information is matched with a predetermined period, and such that the waiting time is different from waiting times of other sensor units. In the sensor system, the transmission period of the detection information may be longer than a time necessary for all the sensor units to transmit the detection information.

In the sensor system, the waiting time may be fixed longer than the time necessary for all the sensor units to transmit the detection information. In the sensor system, the waiting time may be shortened by a transmission period of the synchronization signal every time the synchronization signal is transmitted, when the waiting time is longer than the transmission period of the synchronization period.

In the sensor system, the sensor unit may be a photoelectric sensor unit, and each photoelectric sensor unit projects light after a delay time fixed for each photoelectric sensor unit elapses with the synchronization signal as a starting point. The transmission time of the detection information is controlled using the synchronization signal used to prevent mutual interference between the photoelectric sensor units. Therefore, wiring, the configuration, and the like, which are used to output the synchronization signal, can be simplified compared with the case that the synchronization signal is separately output for the two use applications.

In the sensor system, the detection information may be transmitted through a transmission line to which all the sensor units are connected, and the synchronization signal may be transmitted through a transmission line in which the sensor units adjacent to each other are connected.

BRIEF DESCRIPTION OF THE DRAWINGS

Fig. 1 is a schematic diagram of a photoelectric sensor system;
Fig. 2 is a perspective view illustrating an exterior of a communication unit;
Fig. 3 is a functional block diagram of the communication unit;
Fig. 4 is a perspective view illustrating a sensor unit;
Fig. 5 is a diagram illustrating an internal configuration of the sensor unit;
Fig. 6 is a diagram illustrating a delay time T of each sensor unit;
Fig. 7 is a diagram (part 1) illustrating a waiting time WT of each sensor unit;
Fig. 8 is a diagram (part 2) illustrating the waiting time WT of each sensor unit;
Fig. 9 is a flowchart illustrating processing performed by each sensor unit in order to recognize a channel number;
Fig. 10 illustrates binary data transmitted by a master unit;
Fig. 11 illustrates binary data transmitted by a slave unit;
Fig. 12 is a flowchart illustrating processing performed by the sensor unit in order to set the waiting time WT;
Fig. 13 is a flowchart (part 1) illustrating processing performed by the master unit in order to transmit a light receiving amount;
Fig. 14 is a flowchart (part 1) illustrating the processing performed by the slave unit in order to transmit the light receiving amount;
Fig. 15 is a diagram (part 3) illustrating the waiting time WT of each sensor unit;
Fig. 16 is a flowchart (part 2) illustrating processing performed by the master unit in order to transmit the light receiving amount; and
Fig. 17 is a flowchart (part 2) illustrating the processing performed by the slave unit in order to transmit the light receiving amount.

DETAILED DESCRIPTION

Hereinafter, an embodiment of the present invention will be described below with reference to the drawings. In the following description, identical components are designated by identical numerals. The names and the functions of the identical components are identical to each other. Accordingly, their detailed description is not repeated.

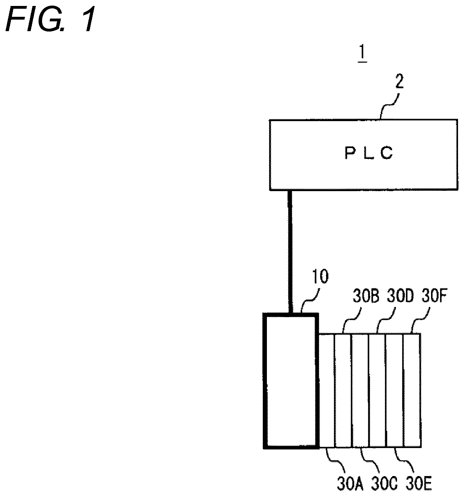

A photoelectric sensor system 1 that is an example of a sensor system will be described below with reference to Fig. 1. A sensor system other than a photoelectric sensor system may be used as well. The photoelectric sensor system 1 includes a communication unit 10 and a plurality of sensor units 30 (30A to 30F).

The communication unit 10 (which is an example of a communication device) is connected to a PLC 2 (which is an example of a control device) through a network such as a LAN (Local Area Network). For example, the communication unit 10 is configured to conduct communication with the PLC 2 using EtherCAT (registered trademark), CC-LINK (registered trademark), DeviceNET, and CompoNET.

The sensor units 30A to 30F are physically and electrically connected to the communication unit 10. The number of sensors units 30 connected to the communication unit 10 is not limited to the numbers illustrated in Fig. 1. In the embodiment, the communication unit 10 stores information received from each of the sensor units 30A to 30F in a memory, and transmits the stored information to the PLC 2. Accordingly, signals from the sensor units 30A to 30F are transmitted to the PLC 2 while centralized by the communication unit 10.

For example, a determination signal and detection information are transmitted to the communication unit 10 from each sensor unit 30. For example, the determination signal is an on signal or an off signal, which is obtained by comparison between a light receiving amount of the sensor unit 30 and a threshold. The detection information is a detection value obtained by a detection operation (specifically, light projection and light reception) of the sensor unit 30. For example, the detection information is the light receiving amount.

For example, the sensor unit 30 is attached to a side surface of the communication unit 10. Parallel communication or serial communication is used in communication between the communication unit 10 and the sensor unit 30. That is, the communication unit 10 and the sensor unit 30 are physically connected to each other through a serial transmission line and a parallel transmission line. For example, the determination signal is transmitted to the communication unit 10 from the sensor unit 30 on the parallel transmission line. The detection information (the light receiving amount) is transmitted to the communication unit 10 from the sensor unit 30 on the serial transmission line. The communication unit 10 and the sensor unit 30 may be connected to each other through only one of the serial transmission line and the parallel transmission line.

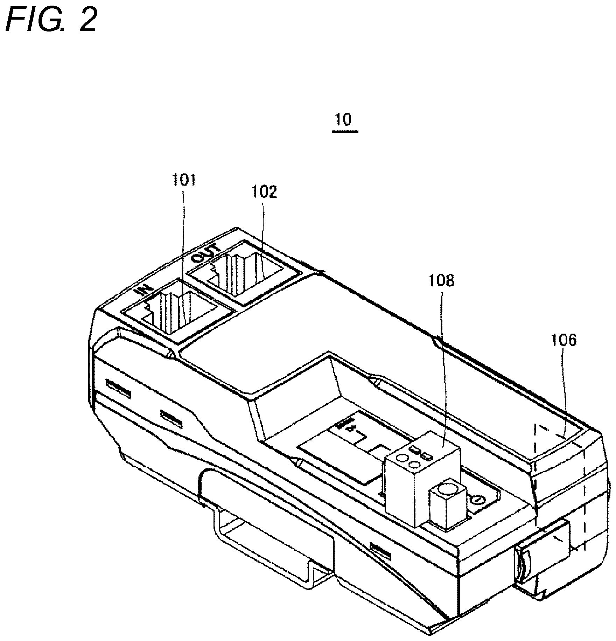

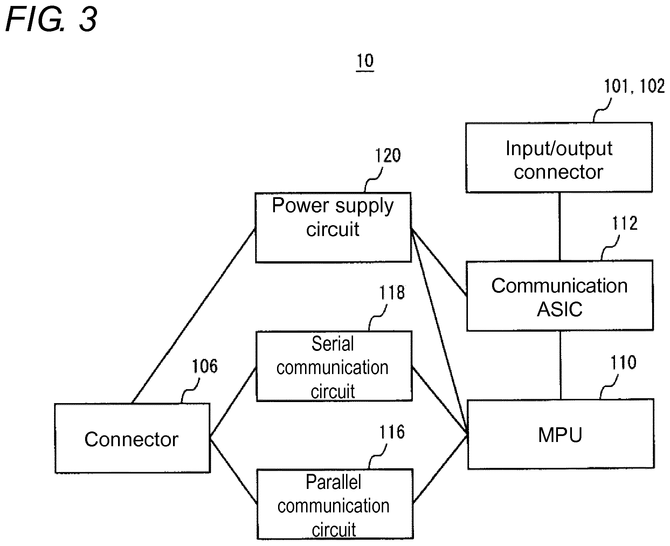

The communication unit 10 will further be described with reference to Figs. 2 and 3. As illustrated in Fig. 2, the communication unit 10 includes an input connector 101 and an output connector 102, which are used for connection to the PLC 2, a connector 106 used in the connection to the sensor unit 30, and a power input connector 108.

As illustrated in Fig. 3, the communication unit 10 includes an MPU (Micro Processing Unit) 110, a communication ASIC (Application Specific Integrated Circuit) 112, a parallel communication circuit 116, a serial communication circuit 118, and a power supply circuit 120.

The MPU 110 operates so as to totally perform all pieces of processing in the communication unit 10. The communication ASIC 112 manages the communication with the PLC 2. As described above, the communication unit 10 conducts communication with the PLC 2 using EtherCAT, CC-LINK, DeviceNET, and CompoNET.

The parallel communication circuit 116 is used in the parallel communication between the communication unit 10 and the sensor unit 30. Similarly, the serial communication circuit 118 is used in the serial communication between the communication unit 10 and the sensor unit 30.

The power supply circuit 120 supplies a driving voltage to the MPU 110 and the communication ASIC 112.

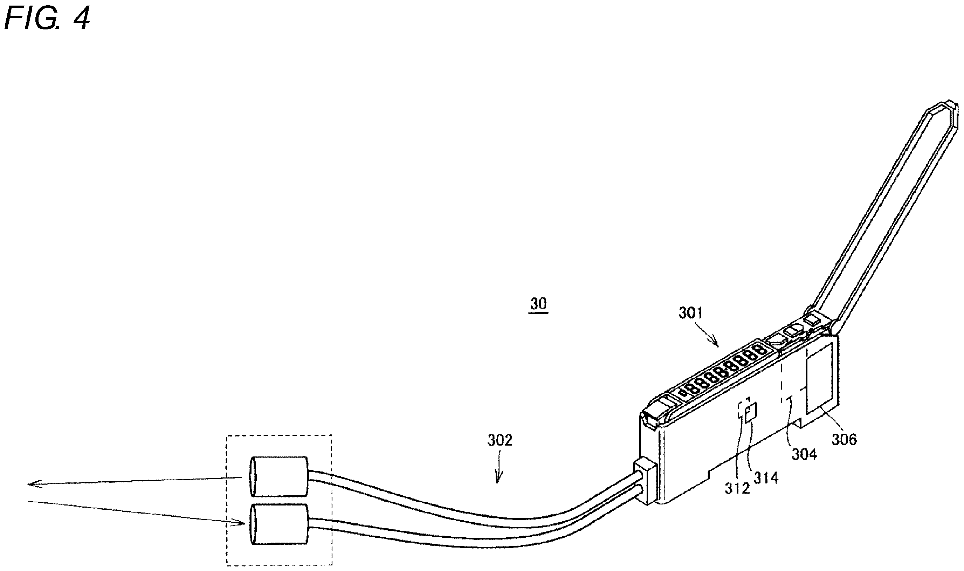

A representative sensor unit 30 will further be described with reference to Fig. 4. The sensor unit 30 includes an amplifier unit 301 and a fiber unit 302. The amplifier unit 301 includes a cover that is turnably attached to a casing and a frame that is accommodated in the casing. The amplifier unit 301 includes a display unit and an operation unit in an upper surface of the frame that is exposed in an opened state of the cover.

Connectors 304 and 306 used in the connection to the communication unit 10 or another amplifier unit 301 are provided in both side surface portions of the amplifier unit 301. Accordingly, the plurality of amplifier units 301 can be connected in series with respect to the communication unit 10. The signal from the amplifier unit 301 connected to the other amplifier unit 301 is transmitted to the communication unit 10 through another amplifier unit 301.

The fiber unit 302 is connected to a front wall portion of the amplifier unit 301. The fiber unit 302 includes a head unit, a light-projecting-side optical fiber, and a light-receiving-side optical fiber.

A right-hand communication optical communication window 312 is disposed in a right side surface of the amplifier unit 301, and a left-hand communication optical communication window 314 is disposed in a left side surface of the amplifier unit 301. The optical communication windows 312 and 314 are closed by resin filters, which transmit an infrared ray while blocking a visible ray, and surfaces of the resin filters are formed into flat surfaces so as to be flush with the side surfaces.

As described in detail later, a right-hand communication pair of a light emitting element and a light receiving element (not illustrated), in which the infrared ray is used, is disposed behind the optical communication window 312 in the right side surface, and a left-hand communication pair of a light emitting element and a light receiving element (not illustrated), in which the infrared ray is used, is disposed behind the optical communication window 314 in the left side surface.

When the plurality of sensor units 30 are disposed in line by coupling the sensor units 30 to each other using the connectors 304 and 306, the optical communication window 312 and the optical communication window 314 are opposed to each other. Therefore, the sensor units 30 adjacent to each other can conduct bidirectional optical communication through the optical communication windows 312 and 314 using the infrared ray.

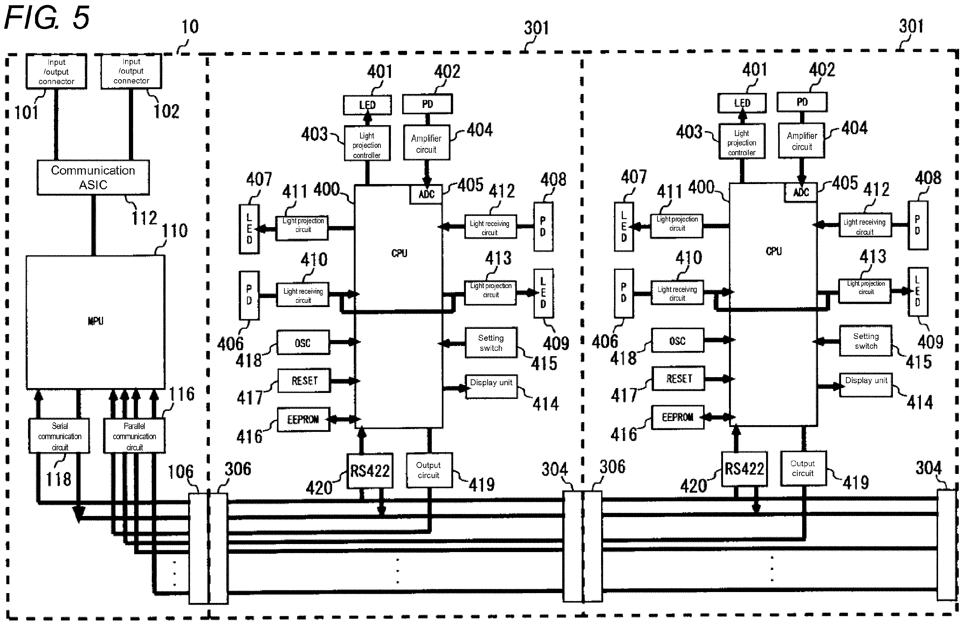

An internal configuration of the amplifier unit 301 will be described with reference to Fig. 5. The amplifier unit 301 is constructed by various processing functions implemented by a CPU (Central Processing Unit) 400 in a software manner and various processing functions implemented by a dedicated circuit in a hardware manner.

The CPU 400 controls a light projection controller 403 to cause a light emitting element (LED) 401 to emit the infrared ray. More specifically, the CPU 400 controls the light projection controller 403 such that the light is projected after a delay time T fixed for each sensor unit 30 elapses with a synchronization signal, which is transmitted at a predetermined period from the sensor unit 30 recognized as a master unit, as a starting point. The delay time T of each sensor unit 30 is fixed such that a light projection period is matched with a predetermined period TF, and such that the delay time T is different from the delay times T of other sensor units 30.

A signal generated by light reception of the light receiving element (PD) 402 is amplified by an amplifier circuit 404, converted into a digital signal by an A/D converter 405, and taken into to the CPU 400. The CPU 400 directly transmits light reception data, namely, the light receiving amount as the detection information to the communication unit 10. The CPU 400 transmits the on signal or the off signal, which is obtained by a determination whether the light receiving amount is greater than a predetermined threshold, as the determination signal to the communication unit 10.

The CPU 400 controls left and right light projection circuits 411 and 413 to cause left and right communication light emitting elements (LED) 407 and 409 to emit the infrared ray to adjacent photoelectric sensor units. The infrared rays incoming from the adjacent left and right photoelectric sensor units are received by left and right light receiving elements (PD) 406 and 408, and light reception signals of the light receiving elements 406 and 408 are input to the CPU 400 through the light receiving circuits 410 and 412. The CPU 400 conducts optical communication with adjacent left and right sensor units by controlling transmission and reception signals based on a predetermined protocol.

The light receiving element 406, the communication light emitting element 409, the light receiving circuit 410, and the light projection circuit 413 are used to transmit and receive the synchronization signal preventing mutual interference between the sensor units 30. Specifically, in each sensor unit 30, the light receiving circuit 410 and the light projection circuit 413 are directly connected to each other. Therefore, the received synchronization signal is rapidly transmitted to another adjacent sensor unit 30 from the communication light emitting element 409 through the light projection circuit 413 while the CPU 400 does not perform delay processing.

As described above, the synchronization signal is transmitted at the predetermined period from the sensor unit 30 recognized as the master unit. For example, in the period in which all the sensor units 30 are controlled so as to emit the infrared rays from the communication light emitting elements 409, the sensor unit 30 that does not receive the infrared ray using the light receiving element 406 recognizes itself as the master unit. That is, one of the sensor units 30 at both ends in the sensor units 30 disposed in line is the master unit.

The CPU 400 controls lighting of a display unit 414. The CPU 400 processes a signal from a setting switch 415. Various pieces of data necessary for an operation of the CPU 400 are stored in recording mediums such as an EEPROM (Electrically Erasable Programmable Read Only Memory) 416. A signal obtained from a reset unit 417 is transmitted to the CPU 400 to reset measurement control. A reference clock is input to the CPU 400 from an oscillator (OSC) 418.

An output circuit 419 performs processing of transmitting the determination signal obtained by the comparison between the light receiving amount and the threshold. As described above, in the embodiment, the determination signal is transmitted to the communication unit 10 using the parallel communication.

A parallel communication transmission line is a transmission line through which the communication unit 10 is separately connected to each sensor unit 30. That is, each sensor unit 30 is connected to the communication unit 10 through the individual parallel communication line. However, as illustrated in Fig. 5, the parallel communication line connecting the communication unit 10 and the sensor unit 30 other than the sensor unit 30 adjacent to the communication unit 10 may pass through another sensor unit 30.

A serial communication driver 420 performs processing of receiving a command transmitted from the communication unit 10 and processing of transmitting the detection information (the light receiving amount). In the embodiment, an RS-422 protocol is used in the serial communication. An RS-485 protocol may be used in the serial communication.

A serial communication transmission line is a transmission line through which the communication unit 10 and all the sensor units 30 are connected to each other. That is, all the sensor units 30 are connected to the communication unit 10 through the serial communication line such that the signal can be transmitted in a bus form.

In the embodiment, each sensor unit 30 transmits the detection information to the communication unit 10 on the serial transmission line after a waiting time fixed for each sensor unit 30 elapses with the synchronization signal as the starting point. The waiting time of each sensor unit 30 is fixed so as to be different from the waiting times of other sensor units 30.

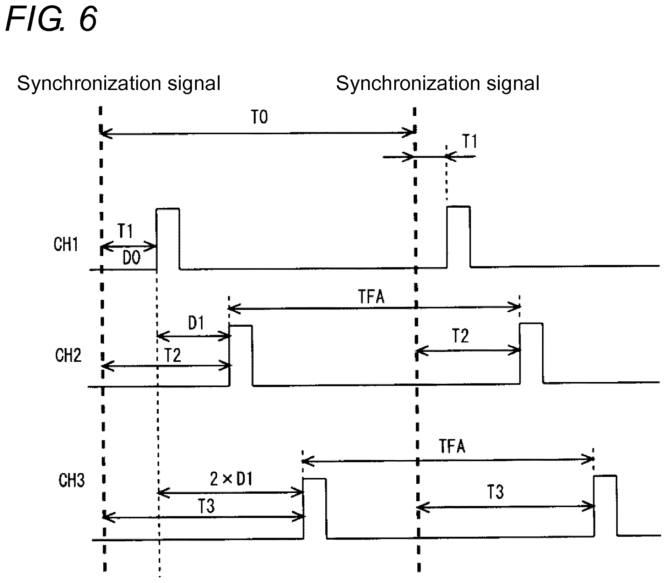

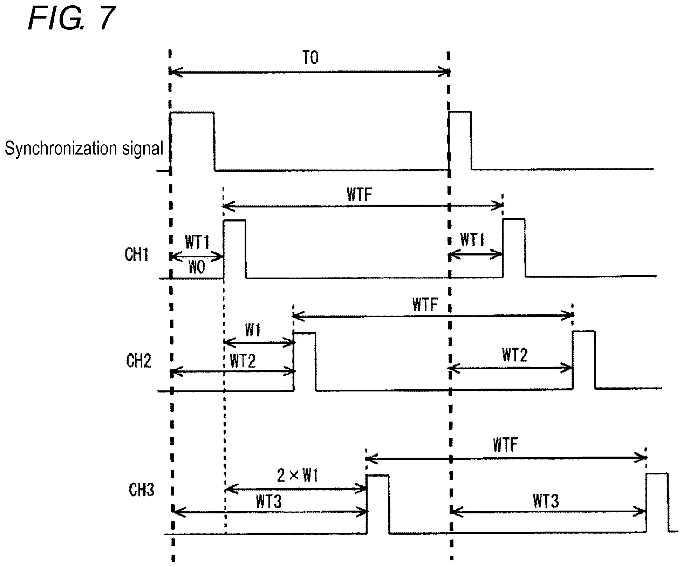

The delay time T used to control a light projection time and a waiting time WT used to control a transmission time of the detection information will be described below with reference to Figs. 6 and 7.

Figs. 6 and 7 illustrate an example in which three sensor units 30 are used. It is recognized through channel number recognizing processing that the sensor unit 30 serving as the master unit transmitting the synchronization signal has a channel (CH) number of "1". Similarly, it is recognized that the sensor units 30 that are of the slave unit have channel numbers of "2" and "3".

As described above, in the embodiment, the sensor unit 30 recognized as the master unit transmits the synchronization signal at a predetermined period T0. Each sensor unit 30 projects the light after the delay time T fixed for each photoelectric sensor unit elapses with the transmitted synchronization signal as the starting point. The delay time T of each photoelectric sensor unit is fixed so as to be different from the delay times T of other photoelectric sensor units.

Referring to Fig. 6, the master unit has a delay time T1 of DO (D0 $\geq$ 0) with respect to the synchronization signal. The delay time DO is previously fixed by a developer. The slave unit of the channel 2 has a delay time T2 of DO + D1 (D1 > 0) with respect to the synchronization signal. The time D1 is previously fixed by the developer based on a sensor unit detection principle and a light projection period TFA fixed from a specification of the sensor unit 30. The slave unit of the channel 3 has a delay time T3 of DO + 2 $\times$ D1 with respect to the synchronization signal.

Referring to Fig. 7, the master unit has a waiting time WT1 of W0 (W0 $\geq$ 0) with respect to the synchronization signal. The waiting time W0 is previously fixed by the developer.

The slave unit of the channel 2 has a waiting time WT2 of W0 + W1 (W1 > 0) with respect to the synchronization signal. The slave unit of the channel 3 has a waiting time WT3 of W0 + 2 $\times$ W1 with respect to the synchronization signal. That is, the waiting time WT of the slave unit is calculated according to the following equation.

$$\text{waiting time WT} = \text{W0} + (\text{m} - 1) \times \text{W1} \qquad (1)$$

Where "m" is the channel number. Each sensor unit 30 is programmed so as to recognize the channel number and so as to set the delay time T and the waiting time WT by itself based on the recognized channel number.

In Fig. 7, the waiting time WT of each sensor unit 30 is fixed such that the transmission period WTF of the detection information is matched with a predetermined period fixed in accordance with the number (three in Fig. 7) of sensor units 30 included in the photoelectric sensor system 1. In Fig. 7, as a result, the transmission period WTF of the detection information is matched with the period TO of the synchronization signal. In the example in Fig. 7, the period TO of the synchronization signal is set so as to be longer than the time necessary for the three sensor units 30 to transmit the detection information, and the transmission period WTF of the detection information is set so as to be longer than the time sensor unit 30 necessary for the three sensor units 30 to transmit the detection information. As a result, the transmission period WTF of the detection information is matched with the period TO of the synchronization signal.

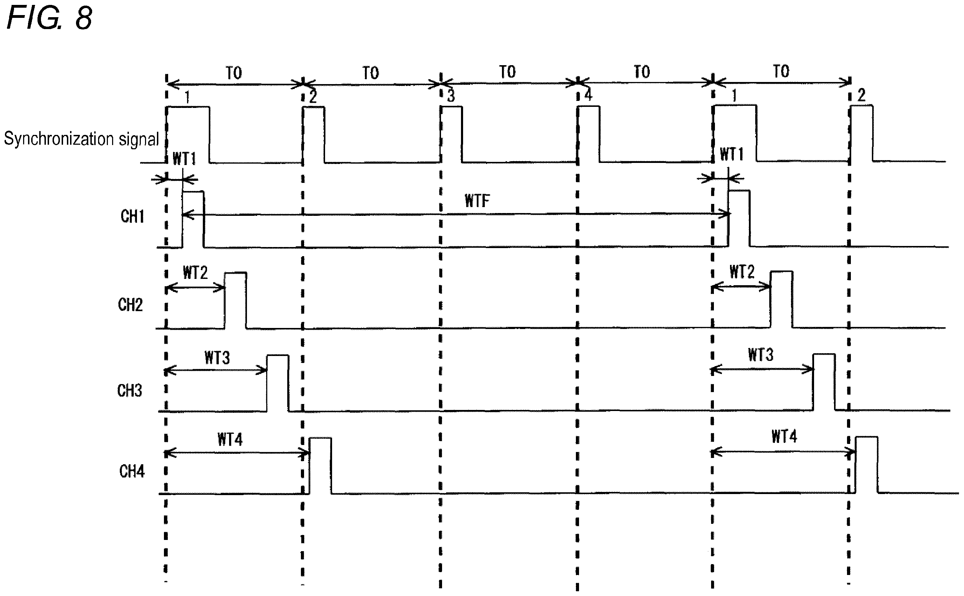

As illustrated in Fig. 8, the transmission period WTF of the detection information may be a fixed value that is greater than or equal to the time necessary for all the maximum number of sensor units 30 possibly included in the photoelectric sensor system 1 to transmit the detection information. In the example in Fig. 8, the transmission period WTF of the detection information is set to four times the period of the synchronization signal. In the example in Fig. 8, the photoelectric sensor system 1 possibly includes up to 12 sensor units 30. In Fig. 8, four sensor units 30 are included.

In the example in Fig. 8, the sensor unit 30 transmits the detection information after the waiting time WT elapses with the synchronization signal, which is transmitted first in the plurality of synchronization signals, as the starting point. The number of transmission times P of the synchronization signal is counted up to four times. In the example in Fig. 8, a pulse width of the synchronization signal transmitted first is longer than pulse widths of other synchronization signals. Accordingly, each sensor unit 30 can check the number of transmission times of the synchronization signal from the pulse width. Alternatively, the pulse width of the synchronization signal except the first-time synchronization signal may be longer than the pulse widths of other synchronization signals. For example, the pulse width of the synchronization signal (fourth-time synchronization signal) at the time when the number of transmission times is reset may be lengthened. The pulse width may be shortened instead of lengthening the pulse width. The sensor unit 30 may transmit the detection information after the waiting time WT elapses with the synchronization signal, which is different from the first-time synchronization signal, as the starting point. The synchronization signal used as the starting point may vary in each sensor unit 30. That is, when the synchronization signal is transmitted the number of times fixed for each sensor unit, the sensor unit 30 may transmit the detection information after the waiting time WT elapses.

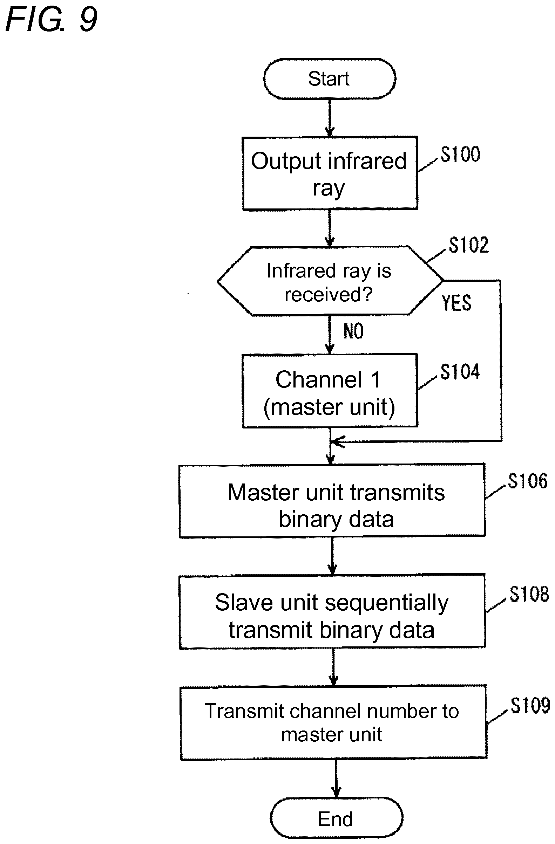

Processing performed by each sensor unit 30 in order to recognize the channel number will be described below with reference to Fig. 9.

In Step (hereinafter Step is abbreviated to "S") 100, each sensor unit 30 outputs the infrared ray for a predetermined period while setting both an infrared input port and an infrared output port to general-purpose input/output allocation. That is, the communication light emitting element 409 emits the infrared ray for the predetermined period.

After the predetermined period elapses since the infrared ray is emitted, when the infrared ray is not received from the light receiving element 406 (NO in S102), the channel number is recognized as "1" in S104. That is, the sensor unit 30 recognizes itself as the master unit.

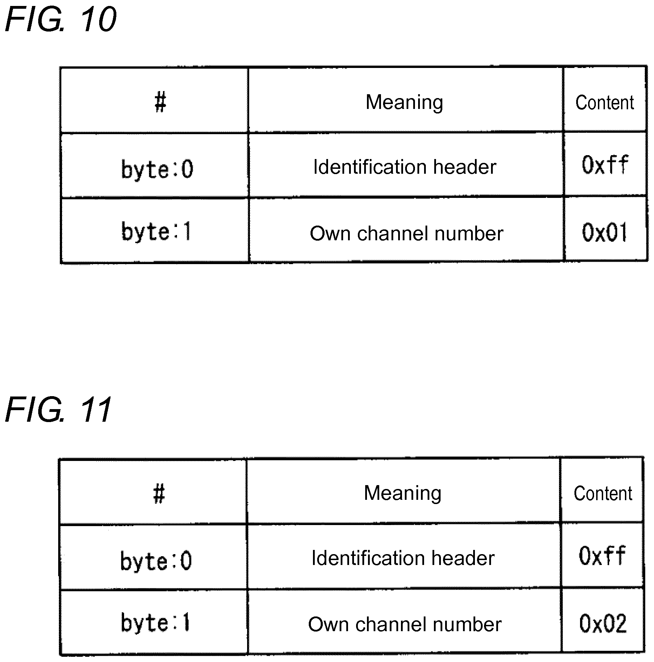

After a predetermined time elapses, in S106, the sensor unit 30 serving as the master unit transmits binary data illustrated in Fig. 10 to the adjacent (for example, the right-hand neighbor) sensor unit 30 using the infrared ray while each sensor unit 30 switches both the infrared input port and the infrared output port to an UART (Universal Asynchronous Receiver Transmitter) allocation. The binary data is repeatedly output at least a predetermined number of times in consideration of different power activation timings. The channel number of the master unit is expressed as the channel 1 by inputting data "0x01" as an "own CH number". As used herein, "setting both the infrared input port and the infrared output port to the general-purpose input/output allocation" means that "not setting the infrared input port and the infrared output port to the UART allocation".

Referring again to Fig. 9, in S108, the sensor unit 30 that receives the binary data, namely, the sensor unit 30 serving as the slave unit transmits binary data illustrated in Fig. 11 to the adjacent (for example, the right-hand neighbor) sensor unit 30 using the infrared ray. Because the data "0x01" is input to the "own CH number" of the received binary data, the sensor unit 30 that receives the binary data recognizes that the own channel number is the channel 2. That is, the number larger by one than the channel number expressed by the "own CH number" of the received binary data is recognized as the channel number. In the binary data illustrated in Fig. 11, data "0x02" is input as the "own CH number" in order to increment by one the channel number to express that the channel number is the channel 2. Therefore, in the case that data "0x05" is input as the "own CH number" of the received binary data, data "0x06" is input as the "own CH number" of the transmitted binary data.

The binary data is sequentially transmitted by each sensor unit 30. Each sensor unit 30 recognizes as the channel number the number larger by one than the channel number expressed by the "own CH number" of the received binary data.

Referring again to Fig. 9, in S109, the sensor unit 30 serving as the slave unit transmits the channel number recognized by itself to the sensor unit 30 serving as the master unit. The master unit recognizes the maximum value of the acquired channel number as the total number of sensor units 30.

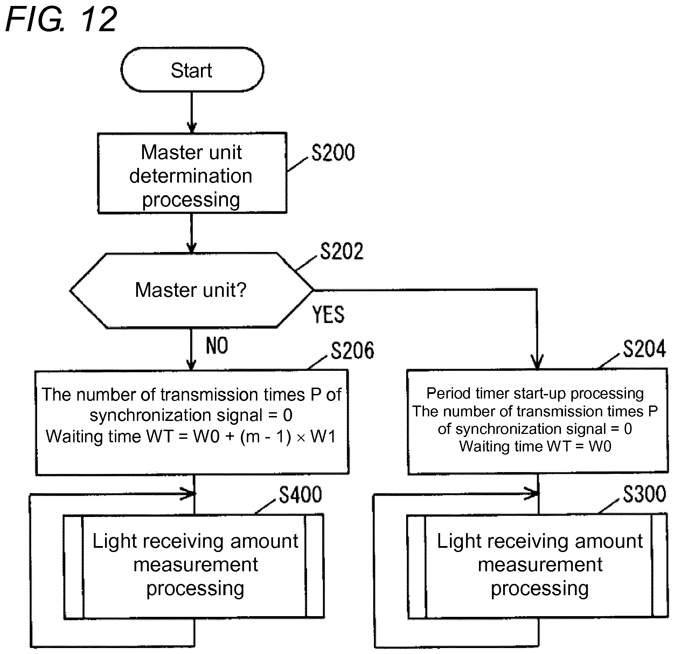

Processing performed by each sensor unit 30 in order to set the waiting time WT will be described below with reference to Fig. 12. When each sensor unit 30 is started up, whether each sensor unit 30 is the master unit or the slave unit is determined in S200 by the above technique. When the sensor unit 30 is the master unit (YES in S202), in S204, processing of starting up a period timer is performed, the number of transmission times P of the synchronization signal is set to "0" (reset), and the waiting time WT is set to the time W0. Then processing of transmitting the detection information (the light receiving amount) is performed in S300.

When the sensor unit 30 is the slave unit (NO in S202), in S206, the number of synchronization signal reception times, namely, the number of transmission times P of the synchronization signal is set to "0" (reset), and the waiting time WT is set to the time $W0 + (m - 1) \times W1$. Where "m" is the channel number. Then the processing of transmitting the detection information is performed in S400.

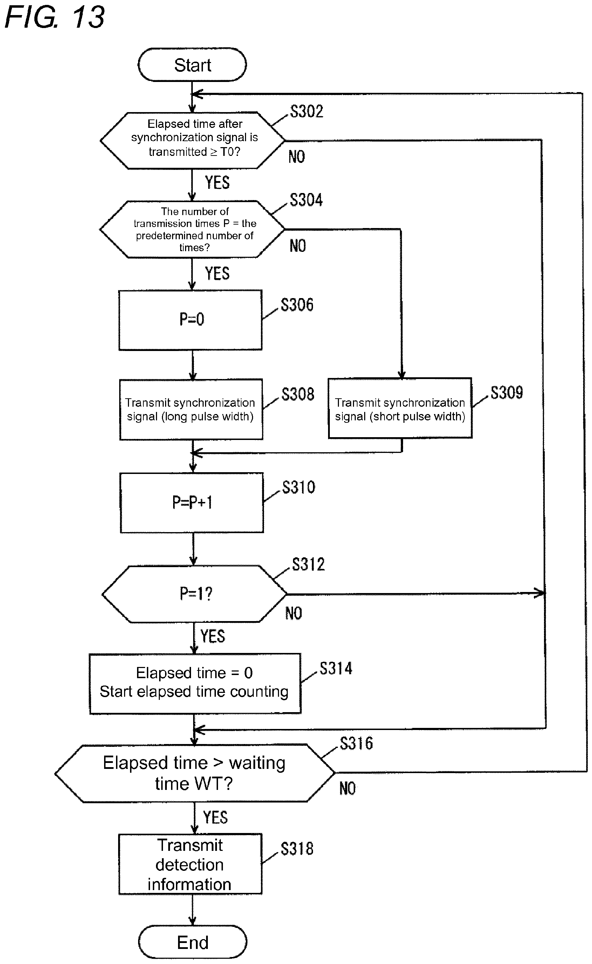

Processing performed by the master unit in order to transmit the detection information will be described below with reference to Fig. 13.

When the elapsed time since the transmission of the previous synchronization signal reaches the period TO of the synchronization signal (YES in S302), in S304, whether the number of transmission times P of the synchronization signal is the predetermined number of times is determined.

When the number of transmission times P of the synchronization signal is the predetermined number of times (YES in S304), the number of transmission times P is set to "0" (reset) in S306, and the synchronization signal having the long pulse width is transmitted in S308. Subsequently, the number of transmission times P of the synchronization signal is incremented by "1" in S310.

When the number of transmission times P of the synchronization signal is not the predetermined number of times (NO in S304), the synchronization signal having the short pulse width is transmitted in S309. The number of transmission times P of the synchronization signal is incremented by "1" in S310.

When the number of transmission times P of the synchronization signal is "1" (YES in S312), the counting of the elapsed time is started S314 after the elapsed time since the transmission of the synchronization signal is set to "0" (reset). When the elapsed time exceeds the waiting time WT (YES in S316), the detection information is transmitted in S318.

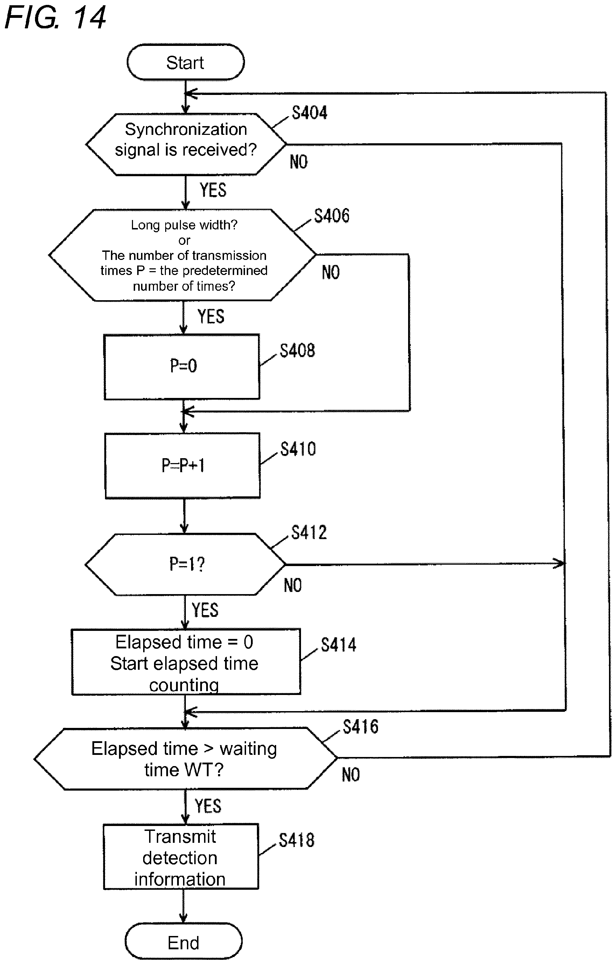

Processing performed by the slave unit in order to transmit the detection information will be described below with reference to Fig. 14. When the slave unit receives the synchronization signal (YES in S404), in S406, whether the synchronization signal having the long pulse width is received or whether the number of transmission times P of the synchronization signal is the predetermined number of times is determined. When the synchronization signal having the long pulse width is received or when the number of transmission times P of the synchronization signal is the predetermined number of times (YES in S406), the number of transmission times P is set to "0" (reset) in S408, and the number of transmission times P of the synchronization signal is incremented by "1" in S410.

When the synchronization signal having the short pulse width is received and when the number of transmission times P of the synchronization signal is not the predetermined number of times (NO in S406), in S410, the number of transmission times P is not reset but incremented by "1".

When the number of transmission times P of the synchronization signal is "1" (YES in S412), in S414, the counting of the elapsed time is started after the elapsed time since the transmission of the synchronization signal is set to "0" (reset). When the elapsed time exceeds the waiting time WT (YES in S416), the detection information is transmitted in S418.

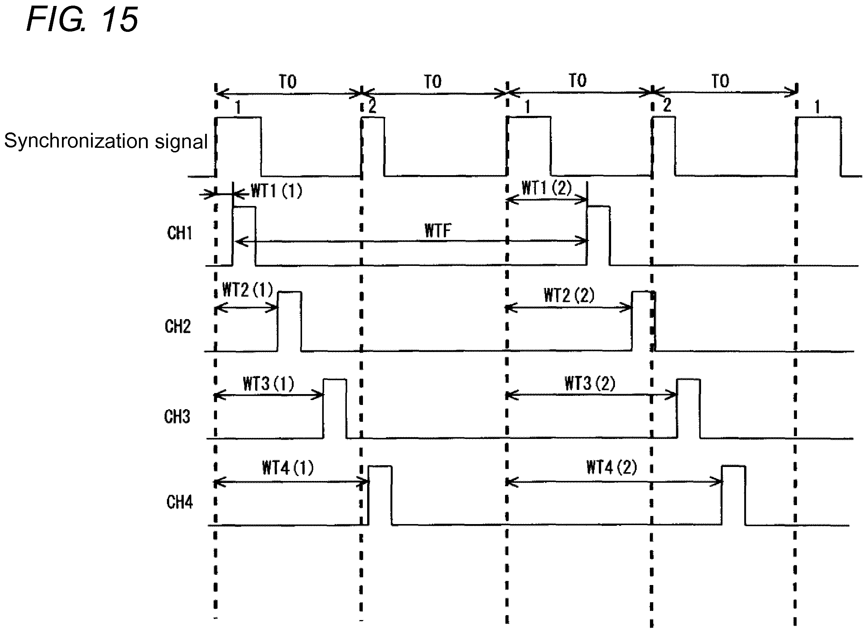

An example in which the transmission period WTF of the detection information is different from an integral multiple of the transmission period TO of the synchronization signal will be described below with reference to Fig. 15. As illustrated in Fig. 15, the waiting time WT(1) for the first-time synchronization signal is possibly different from the waiting time WT(2) for the subsequent synchronization signals.

The waiting time WT(1) for the first-time synchronization signal is calculated by the processing illustrated in Fig. 12.

On the other hand, the master-unit waiting time WT(2) for the subsequent synchronization signals is calculated according to the following equation 2 using the transmission period WTF0 fixed in consideration of the time necessary for all the sensor units 30 to transmit the detection information, the period TO of the synchronization signal, and the first-time waiting time WT(1) of W0.

$$\text{waiting time WT(2)} = \text{WTF0} - \text{T0} + \text{W0} \qquad (2)$$

The slave-unit waiting time WT(2) for the subsequent synchronization signals is calculated according to the following equation 3 using the transmission period WTFO, the period TO of the synchronization signal, and the first-time waiting time WT(1) of W0 + (m - 1) $\times$ W1.

$$\text{waiting time WT(2)} = \text{WTF0} - \text{T0} + \text{W0} + (m - 1) \times \text{W1} \qquad (3)$$

The transmission period WTFO is a fixed value, which is fixed so as to become at least a time necessary for all the maximum number of sensor units possibly included in the photoelectric sensor system 1 to transmit the detection information, or a variable number, which is fixed so as to become at least a time necessary for all the actual number of sensor units 30 included in the photoelectric sensor system 1 to transmit the detection information.

In the case that the transmission period WTFO is the fixed value, the transmission period WTFO of 30 $\times$ W1 is obtained when, for example, the photoelectric sensor system 1 includes up to 30 sensor units 30.

In the case that the transmission period WTFO is the variable value, the transmission period WTFO of 15 $\times$ W1 is obtained when, for example, the photoelectric sensor system 1 actually includes 15 sensor units 30.

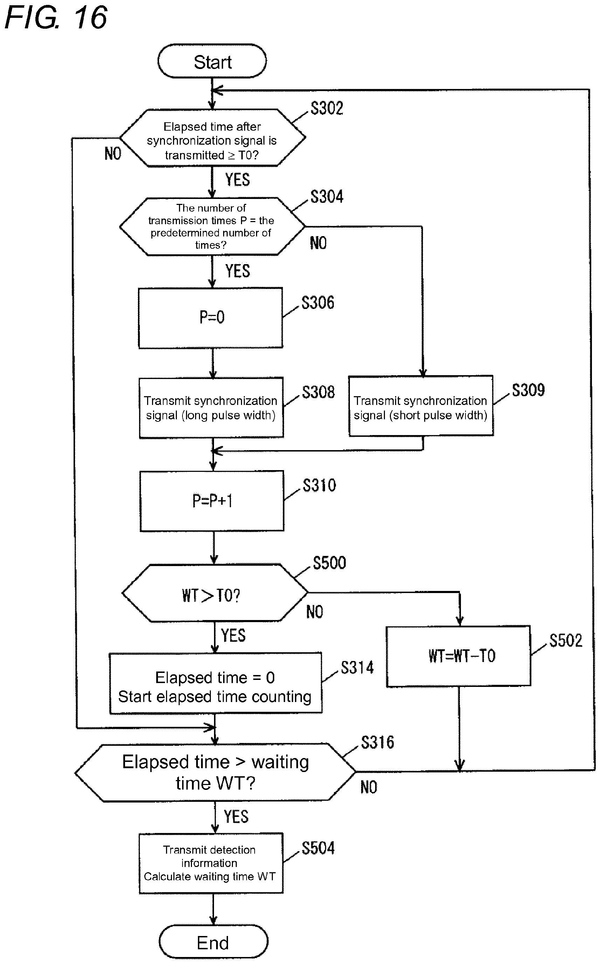

Processing performed by the master unit in order to transmit the detection information in the example in Fig. 15 will be described below with reference to Fig. 16. The pieces of processing identical to those in Fig. 13 are designated by the identical step numbers, and the detailed description is not repeated.

When the current waiting time WT is longer than the period TO of the synchronization signal (YES in S500), the waiting time WT is reset in S502 so as to be shortened. Specifically, the waiting time WT is shortened by the transmission period TO of the synchronization signal.

When the elapsed time exceeds the waiting time WT, in S504, the detection information is transmitted, and the waiting time WT is calculated using the equation 2.

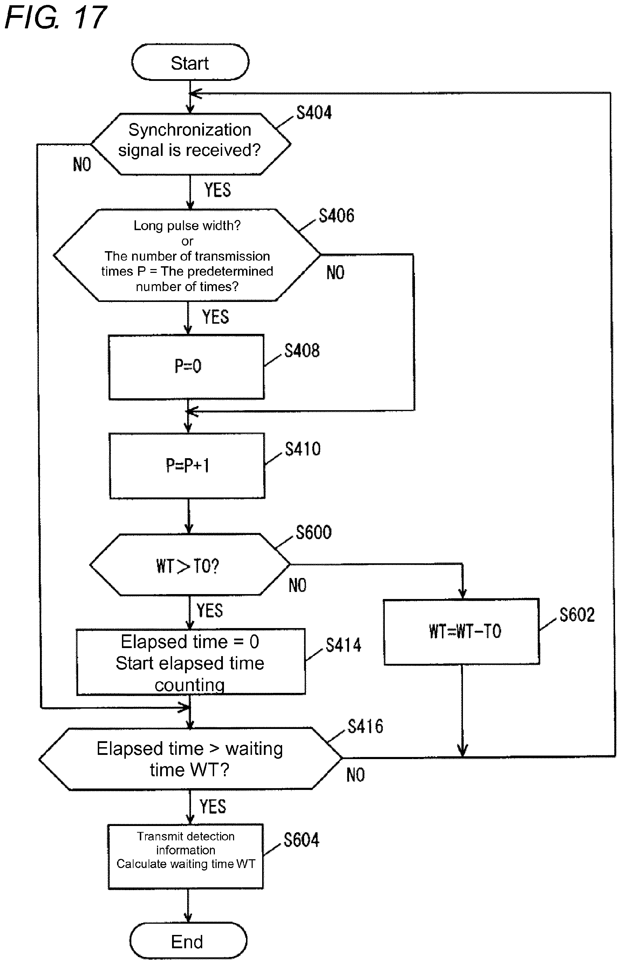

Processing performed by the slave unit in order to transmit the detection information in the example in Fig. 15 will be described below with reference to Fig. 17. The pieces of processing identical to those in Fig. 14 are designated by the identical step numbers, and the detailed description is not repeated.

When the current waiting time WT is longer than the period TO of the synchronization signal (YES in S600), the waiting time WT is reset in S602 so as to be shortened. Specifically, the waiting time WT is shortened by the transmission period TO of the synchronization signal.

When the elapsed time exceeds the waiting time WT, in S604, the detection information is transmitted, and the waiting time WT is calculated using the equation 3.

It is noted that the disclosed embodiment is illustrated only by way of example but not restrictive in all respects. The scope of the present invention is indicated by not the description but the claims, and all the changes within the meanings and ranges equivalent to the claims are also to be included in the present invention.

**Claims**

1. A sensor system (1) comprising:

a plurality of sensor units (30A to 30F); and

a communication device (10) configured to transmit information received from the sensor units (30A to 30F) to a control device, the communication device being connected to the control device and the sensor units (30A to 30F) so as to be able to transmit a signal,

wherein each of the sensor units (30A to 30F) transmits detection information obtained by a detection operation of the sensor unit (30A to 30F) to the communication device after a waiting time fixed for each sensor unit (30A to 30F) elapses with a synchronization signal as a starting point, the synchronization signal being transmitted from one of the sensor units (30A to 30F) at a predetermined period, and

the waiting time of each sensor unit (30A to 30F) is fixed so as to be different from waiting times of other sensor units (30A to 30F),

**characterized in that** each sensor unit (30A to 30F) transmits the detection information to the communication device after the respective waiting time elapses since the synchronization signal has been transmitted for a number of times that is fixed for the respective sensor unit (30A to 30F).

2. The sensor system (1) according to claim 1, wherein each sensor unit (30A to 30F) resets a count value of the number of times the synchronization signal has been transmitted, when the number of times the synchronization signal has been transmitted reaches a predetermined number of times.

3. The sensor system (1) according to claim 2, wherein a count value at which the count value is reset is fixed in accordance with the number of sensor units (30A to 30F).

4. The sensor system (1) according to claim any of claims 1 to 3, wherein the waiting time of each sensor unit (30A to 30F) is fixed such that a transmission period of the detection information is matched with a predetermined period, and such that the waiting time is different from waiting times of other sensor units (30A to 30F).

5. The sensor system (1) according to claim 4, wherein the transmission period of the detection information is longer than a time necessary for all the sensor units (30A to 30F) to transmit the detection information.

6. The sensor system (1) according to claim 5, wherein the waiting time is fixed longer than the time necessary for all the sensor units (30A to 30F) to transmit the detection information.

7. The sensor system (1) according to any of claims 1 to 6, wherein the sensor unit (30A to 30F) is a photoelectric sensor unit, and

each photoelectric sensor unit projects light after a delay time fixed for each photoelectric sensor unit elapses with the synchronization signal as a starting point.

8. The sensor system (1) according to any of claims 1 to 7, wherein the detection information is transmitted through a transmission line to which all the sensor units (30A to 30F) are connected, and

the synchronization signal is transmitted through a transmission line in which the sensor units (30A to 30F) adjacent to each other are connected.

**Patentansprüche**

1. Sensorsystem (1), welches aufweist:

mehrere Sensoreinheiten (30A bis 30F); und

eine Kommunikationsvorrichtung (10), die eingerichtet ist, Informationen, die von den Sensoreinheiten (30A bis 30F) empfangen werden, an eine Steuervorrichtung zu übertragen, wobei die Kommunikationsvorrichtung mit der Steuervorrichtung und den Sensoreinheiten (30A bis 30F) verbunden ist, um ein Signal übertragen zu können,

wobei jede der Sensoreinheiten (30A bis 30F) Erfassungsinformationen, die durch einen Erfassungsvorgang der Sensoreinheit (30A bis 30F) erlangt werden, an die Kommunikationsvorrichtung überträgt, nachdem eine Wartezeit, die für jede Sensoreinheit (30A bis 30F) festgelegt ist, seit einem Synchronisationssignal als Startpunkt verstrichen ist, wobei das Synchronisationssignal von einer der Sensoreinheiten (30A bis 30F) mit einer vorgegebenen Periode übertragen wird, und

wobei die Wartezeit für jede Sensoreinheit (30A bis 30F) so festgelegt ist, dass sie verschieden von den Wartezeiten der anderen Sensoreinheiten (30A bis 30F) ist,

**dadurch gekennzeichnet, dass** jede Sensoreinheit (30A bis 30F) die Erfassungsinformationen an die Kommunikationsvorrichtung, nachdem die jeweilige Wartezeit, seitdem das Synchronisationssignal übertragen wurde, verstrichen ist, eine Anzahl von Malen überträgt, die für die jeweilige Sensoreinheit (30A bis 30F) eingestellt ist.

2. Sensorsystem (1) gemäß Anspruch 1, wobei jede Sensoreinheit (30A bis 30F) einen Zählwert der Anzahl der Malen, die das Synchronisationssignal gesendet wurde, zurücksetzt, wenn die Anzahl der Male, die das Synchronisationssignal gesendet wurde, eine vorgegebene Anzahl von Malen erreicht.

3. Sensorsystem (1) gemäß Anspruch 2, wobei ein Zählwert, bei welchem der Zählwert zurückgestellt wird, in Abhängigkeit von der Anzahl der Sensoreinheiten (30A bis 30F) festgelegt ist.

4. Sensorsystem (1) gemäß einem der Ansprüche 1 bis 3, wobei die Wartezeit für jede Sensoreinheit (30A bis 30F) derart festgelegt ist, dass eine Übertragungsperiode der Erfassungsinformation an eine vorgegebene Periode angepasst ist und dass die Wartezeit verschieden von den Wartezeiten der anderen Sensoreinheiten (30A bis 30F) ist.

5. Sensorsystem (1) gemäß Anspruch 4, wobei die Übertragungsperiode der Erfassungsinformation länger als eine Zeit ist, die notwendig ist, damit alle Sensoreinheiten (30A bis 30F) die Erfassungsinformation übertragen.

6. Sensorsystem (1) gemäß Anspruch 5, wobei die Wartezeit länger als die Zeit festgelegt wird, die notwendig ist, damit alle Sensoreinheiten (30A bis 30F) die Erfassungsinformation übertragen.

7. Sensorsystem (1) gemäß einem der Ansprüche 1 bis 6, wobei die Sensoreinheit (30A bis 30F) eine photoelektrische Sensoreinheit ist, und
jede photoelektrische Sensoreinheit Licht projiziert, nachdem eine Verzögerungszeit, die für jeden photoelektrischen Sensor festgelegt ist, seit dem Synchronisationssignal verstrichen ist.

8. Sensorsystem (1) gemäß einem der Ansprüche 1 bis 7, wobei die Erfassungsinformation durch eine Übertragungsleitung übertragen wird, mit welcher alle Sensoreinheiten (30A bis 30F) verbunden sind, und
das Synchronisationssignal durch eine Übertragungsleitung übertragen wird, in welcher die Sensoreinheiten (30A bis 30F), die zueinander benachbart sind, miteinander verbunden sind.

**Revendications**

1. Système de capteur (1) comprenant :

une pluralité d'unités de capteur (30A à 30F) ; et
un dispositif de communication (10) configuré pour transmettre des informations reçues à partir des unités de capteur (30A à 30F) à un dispositif de commande, le dispositif de communication étant relié au dispositif de commande et aux unités de capteur (30A à 30F) de façon à pouvoir transmettre un signal,
dans lequel chacune des unités de capteur (30A à 30F) transmet des informations de détection obtenues par une opération de détection de l'unité de capteur (30A à 30F) au dispositif de communication après qu'un temps d'attente fixé pour chaque unité de capteur (30A à 30F) se soit écoulé avec un signal de synchronisation en tant que point de départ, le signal de synchronisation étant transmis à partir de l'une des unités de capteur (30A à 30F) à une période prédéterminée, et
le temps d'attente de chaque unité de capteur (30A à 30F) est fixé de manière à être différent de temps d'attente d'autres unités de capteur (30A à 30F),
**caractérisé en ce que** chaque unité de capteur (30A à 30F) transmet les informations de détection au dispositif de communication après que le temps d'attente respectif se soit écoulé depuis que le signal de synchronisation a été transmis un nombre de fois qui est fixé pour l'unité de capteur respective (30A à 30F).

2. Système de capteur (1) selon la revendication 1, dans lequel chaque unité de capteur (30A à 30F) réinitialise une valeur de comptage du nombre de fois que le signal de synchronisation a été transmis, lorsque le nombre de fois que le signal de synchronisation a été transmis atteint nombre de fois prédéterminé.

3. Système de capteur (1) selon la revendication 2, dans lequel une valeur de comptage à laquelle la valeur de comptage est réinitialisée est fixée en fonction du nombre d'unités de capteur (30A à 30F).

**4.** Système de capteur (1) selon l'une quelconque des revendications 1 à 3, dans lequel le temps d'attente de chaque unité de capteur (30A à 30F) est fixé de telle sorte qu'une période de transmission des informations de détection soit adaptée à une période prédéterminée, et de telle sorte que le temps d'attente soit différent de temps d'attente d'autres unités de capteur (30A à 30F).

**5.** Système de capteur (1) selon la revendication 4, dans lequel la période de transmission des informations de détection est plus longue qu'un temps nécessaire pour que toutes les unités de capteur (30A à 30F) transmettent les informations de détection.

**6.** Système de détection (1) selon la revendication 5, dans lequel le temps d'attente est fixé pour être plus long que le temps nécessaire pour que toutes les unités de capteur (30A à 30F) transmettent les informations de détection.

**7.** Système de capteur (1) selon l'une quelconque des revendications 1 à 6, dans lequel l'unité de capteur (30A à 30F) est une unité de capteur photoélectrique, et
chaque unité de capteur photoélectrique projette une lumière après qu'un temps de retard fixé pour chaque unité de capteur photoélectrique se soit écoulé avec le signal de synchronisation en tant que point de départ.

**8.** Système de détection (1) selon l'une quelconque des revendications 1 à 7, dans lequel les informations de détection sont transmises au moyen d'une ligne de transmission à laquelle toutes les unités de capteur (30A à 30F) sont connectées, et
le signal de synchronisation est transmis au moyen d'une ligne de transmission dans laquelle les unités de capteurs (30A à 30F) adjacentes sont connectées.

## FIG. 1

# FIG. 2

<u>10</u>

101 102 108 106

## FIG. 3

FIG. 4

FIG. 5

*FIG. 6*

FIG. 7

# FIG. 8

# FIG. 9

Start

Output infrared ray — S100

Infrared ray is received? — S102

YES

NO

Channel 1 (master unit) — S104

Master unit transmits binary data — S106

Slave unit sequentially transmit binary data — S108

Transmit channel number to master unit — S109

End

## FIG. 10

| # | Meaning | Content |
|---|---------|---------|
| byte:0 | Identification header | 0xff |
| byte:1 | Own channel number | 0x01 |

## FIG. 11

| # | Meaning | Content |
|---|---------|---------|
| byte:0 | Identification header | 0xff |
| byte:1 | Own channel number | 0x02 |

## FIG. 12

```
                    ┌─────────────┐
                    │    Start    │
                    └──────┬──────┘
                           │
                           ▼
              ┌────────────────────┐
              │    Master unit     │ ╱S200
              │   determination    │
              │    processing      │
              └─────────┬──────────┘
                        │
                        ▼                   ╱S202
              ╱─────────────────────╲_____
             ╱     Master unit?      ╲                   │
             ╲                       ╱  YES              │
              ╲─────────┬───────────╱                    │
                    NO  │                                │
                        │        ╱S206                   │       ╱S204
      ┌─────────────────┴────────────┐      ┌────────────┴─────────────────┐
      │ The number of transmission   │      │ Period timer start-up         │
      │ times P of synchronization   │      │ processing                    │
      │ signal = 0                   │      │ The number of transmission    │
      │ Waiting time WT = W0 + (m - 1)│     │ times P of synchronization    │
      │ × W1                         │      │ signal = 0                    │
      │                              │      │ Waiting time WT = W0          │
      └──────────────┬───────────────┘      └──────────────┬────────────────┘
```

The number of transmission times P of synchronization signal = 0
Waiting time WT = W0 + (m - 1) × W1

Period timer start-up processing
The number of transmission times P of synchronization signal = 0
Waiting time WT = W0

S400 — Light receiving amount measurement processing

S300 — Light receiving amount measurement processing

## FIG. 13

```
                    ┌──────────────┐
                    │    Start     │
                    └──────┬───────┘
                           │
              ┌────────────┴────────────┐  S302
             ╱  Elapsed time after       ╲
            ╱   synchronization signal is  ╲  NO
            ╲   transmitted ≥ T0?          ╱
             ╲────────────┬───────────────╱
                          │ YES
              ┌───────────┴─────────────┐  S304
             ╱   The number of            ╲
            ╱  transmission times P = the  ╲  NO
            ╲  predetermined number of     ╱
             ╲  times?                    ╱
              ╲──────────┬──────────────╱
                         │ YES
                 ┌───────┴──────┐  S306
                 │     P=0      │
                 └───────┬──────┘
                         │
        ┌────────────────┴───┐ S308    ┌──────────────────────┐ S309
        │ Transmit synchronization│    │ Transmit synchronization │
        │ signal (long pulse width)│    │ signal (short pulse width)│
        └────────────┬───────────┘    └──────────┬───────────┘
                     │◄─────────────────────────┘
                 ┌───┴──────────┐  S310
                 │    P=P+1     │
                 └───────┬──────┘
                         │
              ┌──────────┴──────────┐  S312
             ╱        P=1?           ╲  NO
             ╲─────────┬────────────╱
                       │ YES
         ┌─────────────┴─────────────┐  S314
         │   Elapsed time = 0         │
         │   Start elapsed time counting │
         └─────────────┬─────────────┘
                       │◄─────────────
            ┌──────────┴──────────┐  S316
           ╱ Elapsed time > waiting ╲  NO
           ╲   time WT?             ╱
            ╲─────────┬────────────╱
                      │ YES
                 ┌────┴─────┐  S318
                 │ Transmit │
                 │ detection│
                 │information│
                 └────┬─────┘
                      │
               ┌──────┴───────┐
               │     End      │
               └──────────────┘
```

23

*FIG. 14*

```
                    ┌─────────┐
                    │  Start  │
                    └────┬────┘
                         │◄──────────────────────────────────┐
                         ▼                                    │
                  ╱─────────────╲  S404                       │
                 ╱ Synchronization ╲                          │
                ╲  signal is received? ╱                      │
                  ╲─────────────╱  NO                         │
                         │ YES                                │
                         ▼                                    │
                  ╱─────────────────╲  S406                   │
                 ╱   Long pulse width?  ╲                     │
                ╱         or             ╲                    │
               ╱  The number of transmission ╲               │
               ╲  times P = the predetermined ╱  NO           │
                ╲     number of times?       ╱                │
                  ╲─────────────────╱                         │
                         │ YES                                │
                         ▼                                    │
                  ┌─────────────┐  S408                       │
                  │    P=0      │                             │
                  └──────┬──────┘                             │
                         │◄──────────────────────┘            │
                         ▼                                    │
                  ┌─────────────┐  S410                       │
                  │   P=P+1     │                             │
                  └──────┬──────┘                             │
                         ▼                                    │
                  ╱─────────────╲  S412                       │
                 ╱     P=1?       ╲──────────────────────┐    │
                  ╲─────────────╱  NO                    │    │
                         │ YES                           │    │
                         ▼                               │    │
                  ┌─────────────┐  S414                   │    │
                  │ Elapsed time = 0                      │    │
                  │ Start elapsed time                    │    │
                  │ counting    │                         │    │
                  └──────┬──────┘                         │    │
                         │◄────────────────────────────┘    │
                         ▼                                    │
                  ╱─────────────╲  S416                       │
                 ╱ Elapsed time > waiting ╲                   │
                ╲    time WT?             ╱  NO ───────────────┘
                  ╲─────────────╱
                         │ YES
                         ▼
                  ┌─────────────┐  S418
                  │  Transmit   │
                  │  detection  │
                  │ information │
                  └──────┬──────┘
                         ▼
                    ┌─────────┐
                    │   End   │
                    └─────────┘
```

# FIG. 15

EP 2 730 984 B1

## FIG. 16

Start

S302 — Elapsed time after synchronization signal is transmitted ≥ T0?
NO / YES

S304 — The number of transmission times P = the predetermined number of times?
NO / YES

S306 — P=0

S308 — Transmit synchronization signal (long pulse width)

S309 — Transmit synchronization signal (short pulse width)

S310 — P=P+1

S500 — WT > T0?
NO / YES

S314 — Elapsed time = 0 Start elapsed time counting

S502 — WT=WT−T0

S316 — Elapsed time > waiting time WT?
NO / YES

S504 — Transmit detection information Calculate waiting time WT

End

## FIG. 17

```
                    ( Start )
                        │
                        ▼
            ┌────────────────────────┐  S404
            │   Synchronization       │
      NO    │  signal is received?    │
            └────────────────────────┘
                        │ YES
                        ▼
            ┌────────────────────────┐  S406
            │   Long pulse width?     │
            │         or              │
            │ The number of transmission│   NO
            │ times P = The predetermined│
            │    number of times?     │
            └────────────────────────┘
                        │ YES
                        ▼
                 ┌──────────┐  S408
                 │   P=0    │
                 └──────────┘
                        │
                        ▼
                 ┌──────────┐  S410
                 │  P=P+1   │
                 └──────────┘
                        │
                        ▼
            ┌────────────────────────┐  S600
            │        WT > T0?         │   NO
            └────────────────────────┘
                        │ YES                    ┌──────────┐  S602
                        ▼                        │ WT=WT-T0 │
            ┌────────────────────────┐           └──────────┘
            │    Elapsed time = 0    │  S414
            │   Start elapsed time   │
            │      counting          │
            └────────────────────────┘
                        │
                        ▼
            ┌────────────────────────┐  S416
            │  Elapsed time > waiting │
            │       time WT?          │   NO
            └────────────────────────┘
                        │ YES
                        ▼
            ┌────────────────────────┐  S604
            │   Transmit detection    │
            │      information        │
            │ Calculate waiting time WT│
            └────────────────────────┘
                        │
                        ▼
                    ( End )
```

**EP 2 730 984 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004295276 A
- DE 19815149 A1
- US 4509170 A